# EUROPEAN PATENT SPECIFICATION

(11) **EP 3 092 700 B1**
(45) Date of publication and mention of the grant of the patent: **28.02.2018**
(21) Application number: 14711463.1
(22) Date of filing: 07.03.2014
(51) Int. Cl.: H02J 13/00

(54) **A UNIVERSAL SERIAL BUS BASED SYSTEM FOR PROTECTION, CONTROL AND MONITORING OF AN ELECTRICAL GRID**
USB-BASIERTES SYSTEM ZUM SCHUTZ SOWIE ZUR STEUERUNG UND ÜBERWACHUNG EINES STROMNETZES
SYSTÈME BASÉ SUR UN BUS SÉRIE UNIVERSEL POUR LA PROTECTION, LA COMMANDE ET LA SURVEILLANCE D'UN RÉSEAU ÉLECTRIQUE

(43) Date of publication of application: 16.11.2016
(73) Proprietor: Siemens Aktiengesellschaft, 80333 München (DE)
(72) Inventor: STOLLBERG, Andreas, 99986 Oberdorla (DE)
(86) International application number: PCT/EP2014/054439
(87) International publication number: WO 2015/131952

(56) References cited:
- WO-A1-03/065538
- DE-A1-102007 004 943
- US-A1- 2006 125 421

## Description

The present disclosure relates to communication aspects in substation automation for an electric power generation, transmission or distribution system.

In ensuring reliable, safe and efficient operation of modern day power generation, transmission and distribution networks, substations are highly important. The substations include primary devices, generally arranged at the switchyards or bays such as electrical generators, cables, lines, bus bars, switches, power transformers and instrument transformers, etc to ensure efficient functioning of the electrical grid. A majority of these primary devices, for example electrical switches, are operated in a reactive mode i.e. as an reaction to a change in conditions of the electrical grid, for example opening of an electrical switch as a reaction to a surge in voltage or in current in the electrical grid. This reactive mode is facilitated for quick actions by making the operation of these primary devices automated via the Substation Automation and Protection Systems.

The substation automation and protection includes secondary devices like (i) sensors for example sensors for voltage (VT), current (CT) and gas density measurements, (ii) actuators of primary devices such as (I/O) for changing transformer tap positions, or for controlling electrical switches like circuit breakers or disconnectors, (iii) contact probes for sensing electrical switch and transformer tap changer positions, and/or (iv) other Intelligent Electronic Devices, such as modern protection relays. Amongst other functions, the secondary devices function to observe the electrical grid, including the primary devices, in order to sense different measurements of the electrical grid or the primary devices associated with the electrical grid, for example measuring 7 the voltage in a section of the electrical grid. The secondary devices also function to control the primary devices in order to ensure implementation of a desired state in the electrical grid, for example isolating a section of the electrical grid by using the circuit breaker or disconnector switches. Furthermore, the secondary devices also help in testing the primary devices to confirm proper functioning of the primary devices during maintenance operations, and so on and so forth.

In substation automation and protection, a bay level equipment such as a Remote Terminal Unit (RTU) or a Remote Telemetry Unit at the substation is constantly required to communicate with these secondary devices for receiving data from the secondary devices and/or for conveying commands to these secondary devices associated with different primary devices. The bay level equipments then either process the incoming data for monitoring the electrical grid and/or further communicate the data to station level controllers such as SCADA (Supervisory Control And Data Acquisition) systems or to any other remote controllers. The bay level equipments may also generate commands for the operation of the primary devices based on the processed data or sometimes may simply receive a command from the station level controllers and communicate the same to the secondary devices. Thus, there is a requirement for reliable, real time, efficient communication between the bay level equipments and the secondary devices such as different sensors and actuators of primary devices.

Conventional hard-wired interfaces are employed to connect conventional current or voltage transformers in the switchyard to the bay level equipment i.e. establishing communication via dedicated copper wires, in which case the analog signals of the instrument transformers are sampled by the bay level equipment. Thus the bay level equipments such as RTUs, protection relays, etc suffer electromagnetic interferences to the signals. Moreover synchronization of data acquired by the conventional bay level equipments is also a major challenge. This leads to bulky and complex equipments.

The problem also exists in the modern substations. For modern day substations, communication standard IEC 61850 containing several protocols has been introduced by the International Electrotechnical Committee (IEC) for communication between the equipments and/or devices at a substation. The standard IEC 61850 describes a general transfer protocol for the protection and control systems in substations in medium and high voltage systems as part of the station automation. The protocol uses TCP/IP as the basic transfer protocol and the Manufacturing Messaging Specification (MMS) is defined as the classic client server communication. In addition to these, two so-called Peer-to-Peer services, which are based directly on the Ethernet protocol, are described for the real time communication, such as those required between the secondary devices and the bay level equipment. One is transfer of rapid polling values as per the standard section IEC 61850-9-1 and other is transfer of GOOSE-messages as per the standard section IEC 61850-8-1. However, implementation of these protocols requires high equipment costs. Moreover, the high costs appear specifically problematic, and thus infeasible when implementation of these protocols are required to establish sensor or actuator buses in a close range (such as within a protecting cabinet for example in the housing of the switchgear).

Moreover, for both conventional equipments as well as IEDs compliant with IEC 61850, when the equipments are positioned at close range of the electrical grid or a primary device, for example IEDs positioned near the electrical grid such as a switchgear device, or a conventional protection relay, or a bay level RTU, the analog signals from the primary devices are guided into the equipments and undergo digitalization, for further processing, after the analog signals are inside the equipments and this leads to requirement of high electromagnetic capabilities for the equipments and thus causes the equipments to become bulky to accommodate mechanisms for required high electromagnetic capabilities.

Document DE 102007004943 A1 discloses a system for monitoring and control of an electrical grid, wherein communication between a substation and a central server is carried out based on USB.

It is therefore an object of the present technique to provide a cost efficient, readily available, easily implementable and simple to operate system for protection, control and monitoring of an electrical grid. The system is required to obviate bulkiness of the devices or equipments used in the system.

The object is achieved by a system for protection, control and monitoring of an electrical grid according to claim 1 of the present disclosure.

A system for protection, control and monitoring of an electrical grid comprising at least one substation is presented. The system includes at least one grid module to sense at least one electrical measurement from the electrical grid and/or to implement an electrical condition in the electrical grid; a central processing module to communicate with the grid module i.e. to receive information corresponding to the electrical measurement sensed by the grid module and/or to convey a command to the grid module corresponding to the electrical condition to be implemented in the electrical grid, and wherein the central processing module is one of a remote terminal unit, a protection relay, and an Intelligent Electronic Device; and an interface module connected between the grid module and the central processing module. The interface module converts the information from analog form to digital form or converts the command from digital form to analog form outside the central processing module. The communication between the interface module and the central processing module is based on Universal Serial Bus architecture, and the grid module, the central processing module and the interface module are located at substation level.

The system of the present technique has several advantages over the conventional substation automation systems and conventional signal processing equipments and devices. The USB is cost efficient, readily available, easily implementable and simple to operate compared to the existing communication protocols such as Ethernet based protocols. Besides these, the USB provides isochronous data transfer to the central processing module and also supports synchronization of transferred data, as an inherent USB functionality by use of 'Start-of-Frame' packets and USB bus clock functionality. Also, the USB supports secure defined latency during communication. Also, the USB offers an option of power supply to the grid modules or its component and thus helps in reducing external power requirements for the grid modules and its components. Moreover, since the information from the grid module is converted to digital form and subsequently the information or the signal in digital form enters the central processing module for further processing, the central processing module is not required to accommodate mechanisms for high electromagnetic compatibility and thus the central processing module has a smaller footprint i.e. is less bulky and simpler than conventional signal processing equipments and devices which need to integrate high electromagnetic compatibilities. Furthermore, since the information is collected and converted to digital form in a decentralized manner i.e. not within the central processing module, the chances of electromagnetic interferences within the central processing module are reduced.

In an embodiment of the system, the USB architecture includes a USB host interface connected to the central processing module and a USB client interface connected to the interface module. The central processing module communicates with the interface module via the USB host interface and the USB client interface module, respectively. These interfaces may be formed by simple, readily available and inexpensive USB ports and plugs and thus make the system cost efficient, simple and easy to fabricate.

In another embodiment of the system, the grid module includes at least one sensor for sensing the at least one electrical measurement from the electrical grid and for generating in analog form the information corresponding to the electrical measurement so sensed. Thus different sensors for observing an electrical power grid and the primary devices in the grid may be used in the system to collect data from the grid or the primary devices.

In another embodiment of the system, the at least one interface module includes an analogue to digital converter (ADC) coupled to the at least one sensor. The ADC converts the information from analog form to digital form. Since the ADC are present outside the central processing module i.e. devices or equipments for data processing or data collection or data recording, the size of the central processing module is reduced and such devices or equipments for data processing or data collection or data recording as envisaged under the present technique as central processing module are compact as compared to the convention devices or equipments for data processing or data collection or data recording.

In another embodiment of the system, the central processing module includes a processor configured to receive the information in digital form from the interface module via the USB client interface and the USB host interface, respectively. Since, information in digital form i.e. digital data is communicated from the interface module to the processor via the USB architecture, the data communication is in real time, isochronous, high speed, and capable of synchronization.

In another embodiment of the system, the information corresponding to the electrical measurements sensed by the grid module includes at least one of alternating voltages and currents supplied by a transformer, a low-energy analog signal supplied by an instrument transformer, an analog outputs from a temperature sensor, an analog output from a pressure sensor, an analog output from a motion sensor, a signal indicating condition of a circuit breaker, a signal indicating condition of a disconnector switch, a signal indicating condition of a grounding switch, a signal indicating condition of an electrical switch positioned at the electrical grid, and a combination thereof. Thus a variety of different electrical measurements of the grid may be communicated to the central processing module by the system of the present technique.

In another embodiment of the system, the grid module includes at least one actuator configured to implement in the electrical grid the electrical condition corresponding to the command. Thus different actuators of primary devices for operating the primary devices may be used in the system to controlling parts of the electrical grid.

In another embodiment of the system, the at least one interface module includes a digital to analogue converter (DAC) coupled to the central processing module. The DAC receives the command from the central processing module and to convert the command from digital form to analog form. Since the DACs are present outside the central processing module, the size of the central processing module is reduced and such devices or equipments for data processing and/or controlling various aspects of the electrical grid as envisaged under the present technique as central processing module are compact as compared to the convention devices or equipments for data processing and/or controlling various aspects of the electrical grid. Furthermore the grid modules are also not required to accommodate the DACs, so there sizes can also be reduced compared to conventionally used actuator devices or equipments.

In another embodiment of the system, the central processing module includes a processor for conveying the command in digital form to the interface module via the USB host interface and the USB client interface, respectively. Since, information in digital form i.e. digital data is communicated from the interface module to the processor via the USB architecture, the data communication is in real time, isochronous, high speed, and capable of synchronization.

In another embodiment of the system, the command conveyed by the central processing module includes at least one of open/close commands for circuit breakers, open/close commands for disconnector switches, lower/rise commands for transformer tap changers, a command to instate a specific position in an electrical switch, or a combination thereof. Thus a variety of different electrical condition may be implemented in the electrical grid by the system of the present technique.

In another embodiment of the system, the USB host interface is connected in a star topology with a plurality of USB client interfaces of corresponding interface modules. The star topology presents a number of benefits such as preventing passing of information in digital form i.e. data packets through an excessive number of nodes in the communication architecture, easy isolation of interface modules and their corresponding grid modules i.e. with affecting operation of any other interface module and its corresponding grid modules, prevention of non-centralized failure from affecting the network, no disruptions to the network when connecting or removing any interface module and its corresponding grid modules, and so on and so forth.

In another embodiment of the system, the system further includes at least one USB hub connected between the USB client interface and the USB host interface such that the central processing module communicates with the interface module via the USB host interface, the USB hub and the USB client interface, respectively. This ensures connecting several interface modules and their corresponding grid modules to a single USB host interface and thus providing an option to have a tiered and large network.

In another embodiment of the system, the USB host interface is connected in a star topology with one of the at least one USB client interface and one of the at least one USB hub. The star topology presents a number of benefits as aforementioned.

In another embodiment of the system, the USB host interface is connected in a tree topology with one of the at least one USB client interface and one of the at least one USB hub. The tree topology presents a number of benefits such as it is scalable and thus several USB client interfaces and their corresponding interface module may be connected to a given USB host interface.

The central processing module is one of a remote terminal unit, a protection relay, and an Intelligent Electronic Device. Thus the system may be efficiently used in bay level or process level automation.

The present technique is further described hereinafter with reference to illustrated embodiments shown in the accompanying drawings, in which:
- FIG 1: schematically represents an exemplary embodiment of a system for protection, control and monitoring of an electrical grid based on Universal Serial Bus architecture;
- FIG 2: schematically represents another exemplary embodiment of the system;
- FIG 3: schematically represents an exemplary embodiment of the system showing relative arrangement of modules of the system;
- FIG 4: schematically represents another exemplary embodiment of the system showing another relative arrangement of the modules of the system;
- FIG 5: schematically represents yet another exemplary embodiment of the system showing yet another relative arrangement of the modules of the system;
- FIG 6: schematically represents an exemplary embodiment of the system depicting plurality of modules; and
- FIG 7: schematically represents an exemplary topology of the system; in accordance with aspects of the present technique.

Hereinafter, above-mentioned and other features of the present technique are described in details. Various embodiments are described with reference to the drawings, wherein like reference numerals are used to refer to like elements throughout. In the following description, for purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

The basic idea of the present technique is to provide a system for substation automation in which a central processing device or equipment such as a remote terminal unit (RTU) or a protection relay communicates with sensors and actuators connected to the central processing device via a USB architecture or USB communication protocol. Thus, an analogue signal generated from one or more sensors positioned at the electrical grid is converted to a digital signal which subsequently is communicated to the central processing device using the USB protocol. It may be noted that the conversion of the signal is performed outside the central processing device and subsequently the digital signal is carried into the central processing device via the USB. Similarly, a digital command signal generated or conveyed from the central processing device is communicated to the outside of the central processing device via the USB and then converted to an analogue signal before the digital command signal enters the actuator, the analogue command signal so created is then carried into the actuator. Hereinafter, the present technique is explained in further detail.

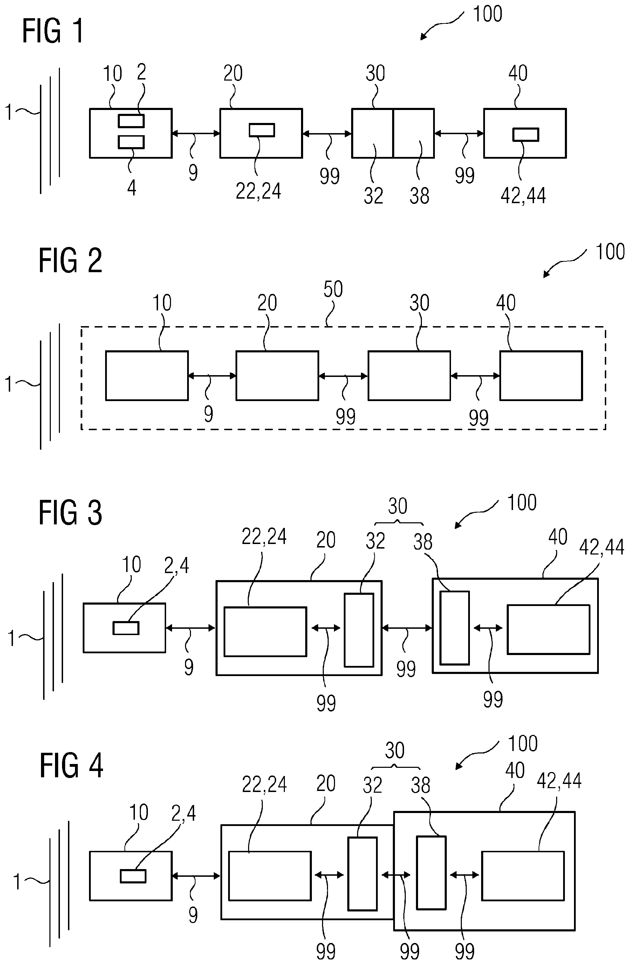

FIG 1 schematically represents an exemplary embodiment of a system 100 for protection, control and monitoring of an electrical grid 1 based on Universal Serial Bus (USB) architecture 30. The system 100 includes at least one grid module 10, at least one interface module 20, a USB architecture 30 and a central processing module 40.

The grid module 10 senses at least one electrical measurement from the electrical grid 1 and/or implements an electrical condition in the electrical grid 1. The grid module 10 is positioned in close vicinity or electrical contact of the electrical grid 1 or in close vicinity or electrical contact of a primary device (not shown) in the electrical grid 1. The primary devices include, but not limited to, electrical cables, lines, bus bars, switches, power transformers and instrument transformers. Such primary devices are well known in the art of power transmission, distribution and automation and thus have not been described in further detail herein for sake of brevity. For the purposes of the present disclosure, the term 'electrical grid' includes such primary devices and such other devices and equipments that are conventionally considered to be primary devices in the art of power transmission, distribution and automation.

Examples of the grid module 10 may include, but not limited to, a sensor 2 for example the sensor 2 for sensing voltage (VT), current (CT) and gas density measurements, (ii) an actuator 4 of primary devices such as Input/Output (I/O) for changing transformer tap positions, or for controlling electrical switches like circuit breakers or disconnectors, (iii) contact probes (not shown) for sensing electrical switch and transformer tap changer positions, and/or (iv) other Intelligent Electronic Devices (not shown) performing function of observing the electrical grid 1 and generating an analogue signal corresponding to an observation of the electrical grid 1.

In one embodiment of the system 100, the grid module 10 includes at least one sensor 2 that senses the at least one electrical measurement from the electrical grid 1 and generates in analog form 9 the information corresponding to the electrical measurement so sensed. The information corresponding to the electrical measurement sensed by the grid module 10 includes, but not limited to, at least one of alternating voltages and currents supplied by a transformer, a low-energy analog signal supplied by an instrument transformer, an analog outputs from a temperature sensor, an analog output from a pressure sensor, an analog output from a motion sensor, a signal indicating condition of a circuit breaker, a signal indicating condition of a disconnector switch, a signal indicating condition of a grounding switch, a signal indicating condition of an electrical switch positioned at the electrical grid 1, and a combination thereof.

In another embodiment of the system 100, the grid module 10 includes at least one actuator 4 that implements in the electrical grid 1 the electrical condition corresponding to the command. In yet another embodiment of the system 100, the grid module 10 includes at least one sensor 2 and at least one actuator 4.

The term 'electrical measurement' as used herein means a measurable electrical property of the grid 1 and includes, but is not limited to, a voltage or current measurement obtained from a section across the electrical grid 1 or from a part of the grid 1. The grid module 10 determines one or more electrical measurements of the grid 1 by sensing or observing the grid 1 for example say by measuring the voltage or current across a section (not shown) of the grid 1. The term 'electrical condition' as used herein means a physical or electrical state of the grid 1 or any parts of the grid 1 that has an effect on the flow of electrical current through the grid 1 or though any part of the grid 1, for example a 'closed' or 'open' state of an electrical switch in the grid 1 presents two different electrical conditions of the part of the grid 1. An example of the grid module 10 implementing the electrical condition is when the grid module 10 is an actuating means that actuates a given electrical switch in the grid 1 to change its position from an 'open' state to a 'closed' state.

In the system 100, the central processing module 40 is equipped to process the information corresponding to the electrical measurement sensed by the grid module 10 and/or to convey a command to the grid module 10 corresponding to the electrical condition to be implemented in the electrical grid 1. In processing the information, the central processing module 40 performs one or more of, but not limited to, recordation of the information in a suitable format, processing of the information to determine further electrical properties or electrical conditions or electrical status of the grid 1, and communicate the information in suitable format to further systems such as SCADA.

In conveying the command to the grid module 10, the central processing module 40 either generates a set of instructions for the grid module 10 and then sends the generated set of instructions to the grid module 10 or receives a set of instructions from some other controller device such as SCADA and passes on the set of instructions to the grid module 10. The command conveyed by the central processing module 40 comprises at least one of open/close commands for circuit breakers, open/close commands for disconnector switches, lower/rise commands for transformer tap changers, a command to instate a specific position in an electrical switch, or a combination thereof.

Thus, the central processing module 40 is in communicative contact with the grid module 10 in order to be able to receive the information generated by the grid module 10 and/or in order to be able to send the command to the grid module 10.

The central processing module 40 is a processor-based or microprocessor-based electrical device or equipment that functions to record, process or further communicate the information from the grid module 10 and/or to generate or provide the commands, i.e. a set of instructions, for the grid module 10. As shown in FIG 1, in one embodiment of the system 100, the central processing module 40 includes a processor 42 for recording, processing or further communicating, for example to SCADA, the information received from the grid module 10. In another embodiment of the system 100, the central processing module 40 includes a processor 44 for generating and providing; or by receiving, for example from SCADA, and providing the command, i.e. a set of instructions, to the grid module 10. It may be noted that the processor 42 and the processor 44 may be a single processing element or processor. Example of the central processing module 40 include, but not limited to, Remote Terminal Unit (RTU).

Thus, in the system 100, the central processing module 40 of the system 100 communicates with the grid module 10 to receive information corresponding to the electrical measurement sensed by the grid module 10 and/or to convey a command to the grid module 10 corresponding to the electrical condition to be implemented in the electrical grid 1. The information, as generated by the grid module 10, is either in analogue form 9 or in binary form (not shown) or in a combination thereof. The command, as conveyed by the central processing module 40, is in digital form 99.

The system 100 includes an interface module 20 connected between the grid module 10 and the central processing module 40. The interface module 20 is configured to convert the information from analog form 9 to digital form 99 or to convert the command from digital form 99 to analog form 9. This means that the information generated by the grid module 10 in analogue form 9 is received by the interface module 20 and is converted by the interface module 20 into the information in digital form 99. This conversion is performed by an analogue to digital convertor (ADC) 22 which is included in the interface module 20 in one embodiment of the system 100. Similarly, the command conveyed by the central processing module 40 in digital form 99 is received by the interface module 20 and is converted by the interface module 20 into the command in analogue form 9. This conversion is performed by a digital to analogue convertor (DAC) 24 which is included in the interface module 20 in one embodiment of the system 100. In yet another embodiment of the system 100, the interface module 20 includes ADC 22 as well as DAC 24.

It may be noted that in the system 100, the conversion of the information from the analogue form 9 to the digital form 99 and/or the conversion of the command from the digital form 99 to the analogue form 9 is performed outside the central processing module 40 or the grid module 10 i.e. the interface module 20 is physically separate from the central processing module 40 or the grid module 10. This means that the interface module 20 is not an integral part of the central processing module 40 or the grid module 10. In one embodiment of the system 100, the interface module 20 is located outside a housing (not shown) of the central processing module 40 or a housing (not shown) of the grid module 10.

The system 100 further includes a USB architecture 30 as a means of communication between the interface module 20 and the central processing module 40. The USB architecture 30 means a communication system or mechanism including, but not limited to, USB hardware elements, such as cables, receptacles, plugs, connectors, sockets, etc and USB software elements, such as drivers, instructions for data transfer, etc., that function to transfer data using the USB protocol. Thus, in the system 100 of the present disclosure the communicative connection between the interface module 20 and central processing module 40 uses USB protocol or the USB architecture 30. This means that the information in digital form 99 from the interface module 20 is transferred to the central processing module 40 via the USB architecture 30. Furthermore, this means that the command in digital form 99 from the central processing module 40 is transferred to the interface module 20 via the USB architecture 30. For the purposes of the present disclosure, the transfer of the information in digital form 99 from the interface module 20 to the central processing module 40 and/or transfer of the command in digital form 99 from the central processing module 40 to the interface module 20 via the USB architecture 30 is referred to as 'data transfer' between the central processing module 40 and the interface module 20.

In one embodiment of the system 100, the USB architecture 30 includes a USB host interface 38 connected to the central processing module 40 and a USB client interface 32 connected to the interface module 20. As a result, the central processing module 40 communicates with the interface module 20 via the USB host interface 38 and the USB client interface 32, respectively. The USB host interface 38 and the USB client interface 32 are elements of the USB architecture 30 required to establish communication between the central processing module 40 and the interface module 20 for the data transfer. For example the USB host interface 38 may include, but not limited to, a USB microchip (not shown), set of instructions, and a 'type A' USB socket (not shown). Similarly, for example, the USB client interface 32 may include, but not limited to, a USB microchip (not shown), set of instructions, and a 'type B' USB socket (not shown). The USB host interface 38 and the USB client interface 32 may be connected using a standard USB cable (not shown), for example four shielded wires for the USB 2.0 variant. The USB microchips, type A USB sockets, type B USB sockets, the USB cable, etc are well known in art of USB and thus not explained in further detail for sake of brevity.

The USB architecture 30 supports different type of data transfers such as 'Control', 'Interrupt', 'Bulk', and 'Isochronous' transfers. All these types of transfer are well known in the art of USB and are not explained in detail herein for sake of brevity. The USB architecture 30 is capable of real time data transfer between the interface module 20 and the central processing module 40. It may be noted that the USB architecture allows synchronization of isochronous and interrupt data transfers. The data transfer via the USB architecture 30 is in form of USB packets. Each packet starts with a sync field having a precise bit length for example, a sync field is 8 bits long at low speed and full speed or 32 bits long for high speed and is used to synchronise the clock of the receiver i.e. the interface module 20 or the central processing module 40 with that of the transmitter i.e. the central processing module 40 or the interface module 20, respectively. Non-Return-to-Zero Inverted (NRZI) encoding scheme is used in USB architecture 30 for transferring data, with a sync field to synchronise the host and receiver clocks i.e. the central processing module 40 and the interface module 20. Every millisecond, the USB host i.e. central processing module 40 transmits a special 'SOF' (start of frame) token. The special 'SOF' token, contains an 11-bit incrementing frame number in place of a device address. High-speed USB 2.0 devices receive 7 additional duplicate 'SOF' tokens per frame, each introducing a 125 µs "micro-frame". This is used to synchronize isochronous and interrupt data transfers. Thus, data or information generated at different grid modules 10 in a decentralized way, i.e. each having a different time stamp can be synchronized using the USB architecture 30. The techniques and principle of synchronization of data or information by USB is well known and thus has not been described herein for sake of brevity.

The USB architecture 30 also supports 'plug-n-play' with dynamically loadable and unloadable drivers i.e. the interface module 20 may be plugged to the central processing module 40 in a simple way to establish communication between the interface module 20 and the central processing module 40 and similarly may be unplugged from the central processing module 40 in a simple way to withdraw communication between the interface module 20 and the central processing module 40.

By use of the USB architecture 30, data streams in digital form 99 are allocated a dedicated portion of USB bandwidth to ensure that data can be delivered at desired rates. The USB architecture 30 is also designed for minimal delay of isochronous data transfers. USB bandwidth is allocated among pipes. The USB allocates bandwidth for some pipes when a pipe is established. The USB's bandwidth capacity can be allocated among many different data streams. This allows a wide range of devices to be attached to the USB. Further, different device bit rates, with a wide dynamic range, can be concurrently supported. The techniques and principle of allocation of bandwidth for USB is well known and thus has not been described herein for sake of brevity.

FIG 2 schematically represents another exemplary embodiment of the system 100. As depicted in FIG 2, the system 100 may be envisaged in form of a single device enclosed in a housing 50 with separate modules i.e. the grid module 10, the interface module 20 and the central processing module 40.

FIG 3, FIG 4 and FIG 5, in combination with FIGs 1 and 2, schematically represents an exemplary embodiment of the system 100 showing different relative arrangements of the different modules i.e. the grid module 10, the interface module 20 and the central processing module 40 of the system 100. In all the embodiments depicted in FIGs 3, 4 and 5, the interface module 20 includes the ADC 22 and/or the DAC 24 and the USB client interface 32. The central processing module 40 includes the USB host interface 38. The ADC 22 is coupled to the sensor 2 of the grid module 10 and/or the DAC 24 is coupled to the actuator 4 of the grid module 10. The USB client interface 32 communicates with the USB host interface 38 using the USB protocol for example by use of a USB cable (not shown).

Irrespective of the different relative arrangements of the different modules 10, 20 and 40, the basic scheme of data transfer is same for the different embodiments of the system 100. The data transfer from the grid module 10 to the central processing module 40 is as follows - the sensor 2 of the grid module 10 generates the information in analogue form 9 which travels to the ADC 22 of the interface module 20. At the ADC 22, the information in analogue form 9 is received by the ADC 22 and converted to the information in digital form 99. Subsequently, the information in digital form 99 is communicated to the USB client interface 32 of the interface module 20 and then to the USB host interface 38 of the central processing module 40 and finally communicated to the processor 42 of the central processing module 40 in digital form 99. The date transfer from the central processing module 40 to the grid module 10 is as follows - the central processing module 40 conveys the command in digital form 99 through the USB host interface 38 of the central processing module 40 to the USB client interface 32 of the interface module 20 which in turn transfers the command in digital form 99 to the DAC 24. At the DAC 24, the command in digital form 99 is received by the DAC 24 and converted to the command in analogue form 9. Subsequently, the command in analogue form 9 is transferred to the actuator 4 in the grid module 10. The transfer of the information in analogue form 9 from the grid module 10 to the interface module 20, i.e. to the ADC 22 is through standard analogue signal transfer techniques for example by using copper wires. Similarly, transfer of the command in analogue form 9 from the interface module 20 i.e. the DAC 24 to the grid module 10 is through standard analogue signal transfer techniques for example by using copper wires.

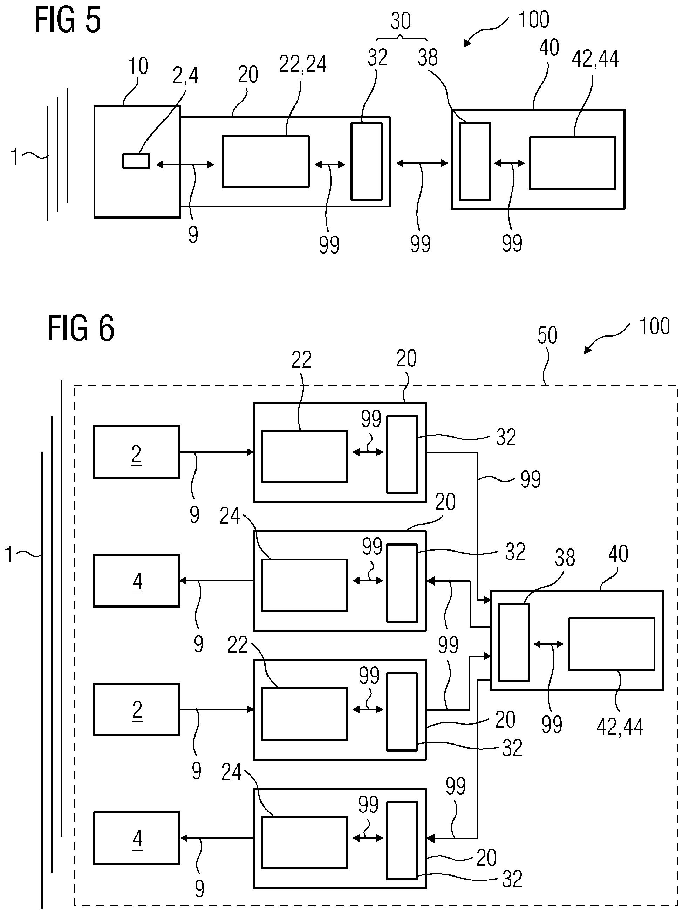

As depicted in FIG 3, in one embodiment of the system 100, the interface module 20 is positioned in between and physically removed from the grid module 10 and the central processing module 40. In another embodiment of the system 100, as depicted in FIG 4, the interface module 20 is positioned in between the grid module 10 and the central processing module 40 and physically close to or in vicinity of the central processing module 40. In yet another embodiment of the system 100, as depicted in FIG 5, the interface module 20 is positioned in between the grid module 10 and the central processing module 40 and physically close to or in vicinity of the grid module 10.

FIG 6 schematically represents an exemplary embodiment of the system 100 depicting plurality of modules i.e. a plurality of grid modules 10 and a plurality of interface modules 20. In this embodiment of the system 100, each interface module 20 is coupled to separate grid module 10. In turn all the interface modules 20 communicate with the one central processing module 40. The USB host interface 38 of the central processing module 40 is connected in a star topology with the plurality of USB client interfaces 32 of the corresponding interface modules 20. In yet another embodiment of the system 100, the plurality of the grid modules 10 communicate with a single interface module 20 which in turn communicates directly with the central processing module 40.

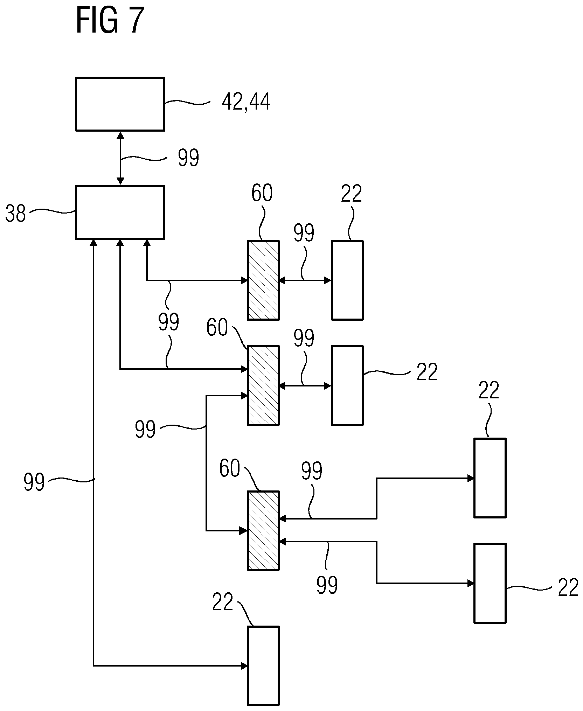

The system 100 may further include one or more USB hubs 60 in the USB architecture 30. FIG 7 schematically represents an exemplary topology of the system 100 depicting the USB hubs 60. Each of the USB hub 60 is connected either to the USB client interface 32 and/or to the USB host interface 38 and/or to another USB hub 60 to form a star or a tree topology with respect to the USB host interface 38. In this embodiment, the central processing module 40 communicates with the interface module 20 via the USB host interface 38, at least one of the USB hubs 60 and the USB client interface 32, respectively. By using the USB hubs 60, the scalability of the system 100 is increased i.e. a large number of USB client interfaces 32 may be connected to the one USB host interface 38.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art. The scope of the invention is, therefore, indicated by the following claims rather than by the foregoing description. All changes, modifications, and variations coming within the meaning and range of equivalency of the claims are to be considered within their scope.

## Claims

1. A system (100) for protection, control and monitoring of an electrical grid (1) comprising at least one substation, the system (100) comprising:
- at least one grid module (10) configured to sense at least one electrical measurement from the electrical grid (1) and/or configured to implement an electrical condition in the electrical grid (1),
- a central processing module (40) configured to communicate with the grid module (10), wherein the central processing module (40) is configured to receive information corresponding to the electrical measurement sensed by the grid module (10) and/or to convey a command to the grid module (10) corresponding to the electrical condition to be implemented in the electrical grid (1), and wherein the central processing module (40) is one of a remote terminal unit, a protection relay, and an Intelligent Electronic Device, and
- an interface module (20) connected between the grid module (10) and the central processing module (40) wherein the interface module (20) is configured to convert the information from analog form (9) to digital form (99) or to convert the command from digital form (99) to analog form (9) outside the central processing module (40), and
wherein communication between the interface module (20) and the central processing module (40) is based on Universal Serial Bus (USB) architecture (30), and
wherein the grid module (10), the central processing module (40) and the interface module (20) are located at a substation level.

2. The system (100) according to claim 1, wherein the USB architecture (30) comprises a USB host interface (38) connected to the central processing module (40) and a USB client interface (32) connected to the interface module (20) such that the central processing module (40) communicates with the interface module (20) via the USB host interface (38) and the USB client interface (32), respectively.

3. The system (100) according to claim 1 or 2, wherein the grid module (10) comprises at least one sensor (2) configured to sense the at least one electrical measurement from the electrical grid (1) and to generate in analog form (9) the information corresponding to the electrical measurement so sensed.

4. The system (100) according to claim 3, wherein the at least one interface module (20) comprises an analogue to digital converter (22) coupled to the at least one sensor (2) and configured to convert the information from analog form (9) to digital form (99).

5. The system (100) according to claim 4, wherein the central processing module (40) comprises a processor (42) configured to receive the information in digital form (99) from the interface module (20) via the USB client interface (32) and the USB host interface (38), respectively.

6. The system (100) according to any of claims 1 to 5, wherein the information corresponding to the electrical measurement sensed by the grid module (10) comprises at least one of alternating voltages and currents supplied by a transformer, a low-energy analog signal supplied by an instrument transformer, an analog outputs from a temperature sensor, an analog output from a pressure sensor, an analog output from a motion sensor, a signal indicating condition of a circuit breaker, a signal indicating condition of a disconnector switch, a signal indicating condition of a grounding switch, a signal indicating condition of an electrical switch positioned at the electrical grid (1), and a combination thereof.

7. The system (100) according to any of claims 1 to 6, wherein the grid module (10) comprises at least one actuator (4) configured to implement in the electrical grid (1) the electrical condition corresponding to the command.

8. The system according to claim 7, wherein the at least one interface module (20) comprises a digital to analogue converter (24) coupled to the central processing module (40) and configured to receive the command from the central processing module (40) and to convert the command from digital form (99) to analog form (9).

9. The system (100) according to claim 8, wherein the central processing module (40) comprises a processor (44) configured to convey the command in digital form (99) to the interface module (20) via the USB host interface (38) and the USB client interface (32), respectively.

10. The system (100) according to any of claims 1 to 9, wherein the command conveyed by the central processing module (40) comprises at least one of open/close commands for circuit breakers, open/close commands for disconnector switches, lower/rise commands for transformer tap changers, a command to instate a specific position in an electrical switch, or a combination thereof.

11. The system (100) according to any of claims 2 to 10, wherein the USB host interface (38) is connected in a star topology with a plurality of USB client interfaces (32) of the corresponding interface modules (20).

12. The system (100) according to any of claims 2 to 11, further comprising at least one USB hub (60) connected between the USB client interface (32) and the USB host interface (38) such that the central processing module (40) communicates with the interface module (20) via the USB host interface (38), the USB hub (60) and the USB client interface (32), respectively.

13. The system (100) according to claim 12, wherein the USB host interface (38) is connected in a star topology with at least one USB client interface (32) and with at least one USB hub (60).

14. The system (100) according to claim 12, wherein the USB host interface (38) is connected in a tree topology with at least one USB client interface (32) and with at least one USB hub (60).

## Patentansprüche

1. System (100) zum Schutz, zur Steuerung und Überwachung eines Stromnetzes (1), das mindestens ein Umspannwerk aufweist, wobei das System (100) Folgendes aufweist:
- mindestens ein Netzmodul (10), das konfiguriert ist, um mindestens eine elektrische Messung von dem Stromnetz (1) zu erfassen, und/oder konfiguriert ist, um einen elektrischen Zustand in dem Stromnetz (1) zu implementieren,
- ein zentrales Verarbeitungsmodul (40), das konfiguriert ist, um mit dem Netzmodul (10) zu kommunizieren, wobei das zentrale Verarbeitungsmodul (40) konfiguriert ist, um Informationen entsprechend der elektrischen Messung, die von dem Netzmodul (10) erfasst wird, zu erhalten und/oder einen Befehl zu dem Netzmodul (10) entsprechend dem elektrischen Zustand, der in dem Stromnetz (1) zu implementieren ist, zu übermitteln, und wobei das zentrale Verarbeitungsmodul (40) eines einer entfernten Endgeräteinheit, eines Schutzrelais und einer intelligenten elektronischen Vorrichtung ist, und
- ein Schnittstellenmodul (20), das zwischen dem Netzmodul (10) und dem zentralen Verarbeitungsmodul (40) geschaltet ist, wobei das Schnittstellenmodul (20) konfiguriert ist, um die Informationen von einer analogen Form (9) in eine digitale Form (99) zu wandeln oder den Befehl von einer digitalen Form (99) in eine analoge Form (9) außerhalb des zentralen Verarbeitungsmoduls (40) zu wandeln, und
wobei die Kommunikation zwischen dem Schnittstellenmodul (20) und dem zentralen Verarbeitungsmodul (40) auf einer universellen seriellen Bus (USB)- Architektur (30) basiert, und
wobei das Netzmodul (10), das zentrale Verarbeitungsmodul (40) und das Schnittstellenmodul (20) auf einer Umspannungswerkebene liegen.

2. System (100) nach Anspruch 1, wobei die USB-Architektur (30) derart eine USB-Host-Schnittstelle (38), die mit dem zentralen Verarbeitungsmodul (40) verbunden ist, und eine USB-Client-Schnittstelle (32), die mit dem Schnittstellenmodul (20) verbunden ist, aufweist, dass das zentrale Verarbeitungsmodul (40) jeweils über die USB-Host-Schnittstelle (38) und die USB-Client-Schnittstelle (32) mit dem Schnittstellenmodul (20) kommuniziert.

3. System (100) nach Anspruch 1 oder 2, wobei das Netzmodul (10) mindestens einen Sensor (2) aufweist, der konfiguriert ist, um die mindestens eine elektrische Messung von dem Stromnetz (1) zu erfassen und in der analogen Form (9) die Informationen entsprechend der so erfassten elektrischen Messung zu erzeugen.

4. System (100) nach Anspruch 3, wobei das mindestens eine Schnittstellenmodul (20) einen Analog-Digital-Wandler (22) aufweist, der mit dem mindestens einen Sensor (2) gekoppelt ist und konfiguriert ist, um die Informationen von der analogen Form (9) in die digitale Form (99) zu wandeln.

5. System (100) nach Anspruch 4, wobei das zentrale Verarbeitungsmodul (40) einen Prozessor (42) aufweist, der konfiguriert ist, um die Informationen in der digitalen Form (99) von dem Schnittstellenmodul (20) jeweils über die USB-Client-Schnittstelle (32) und die USB-Host-Schnittstelle (38) zu erhalten.

6. System (100) nach einem der Ansprüche 1 bis 5, wobei die Informationen entsprechend der elektrischen Messung, die von dem Netzmodul (10) erfasst wird, mindestens eines von Wechselspannungen und -strömen, die von einem Transformator zugeführt werden, eines analogen Signals mit geringer Energie, das von einem Instrumententransformator zugeführt wird, einer analogen Ausgabe von einem Temperatursensor, einer analogen Ausgabe von einem Drucksensor, einer analogen Ausgabe von einem Bewegungssensor, eines Signals, das den Zustand eines Leistungsschutzschalters anzeigt, eines Signals, das den Zustand eines Trennschalters anzeigt, eines Signals, das den Zustand eines Erdungsschalters anzeigt, eines Signals, das den Zustand eines elektrischen Schalters anzeigt, der an dem Stromnetz (1) positioniert ist, und eine Kombination davon umfassen.

7. System (100) nach einem der Ansprüche 1 bis 6, wobei das Netzmodul (10) mindestens einen Aktuator (4) aufweist, der konfiguriert ist, um in dem Stromnetz (1) den elektrischen Zustand zu implementieren, der dem Befehl entspricht.

8. System nach Anspruch 7, wobei das mindestens eine Schnittstellenmodul (20) einen Digital-Analog-Wandler (24) aufweist, der mit dem zentralen Verarbeitungsmodul (40) gekoppelt ist, und konfiguriert ist, um den Befehl von dem zentralen Verarbeitungsmodul (40) zu erhalten und den Befehl von der digitalen Form (99) in die analoge Form (9) zu wandeln.

9. System (100) nach Anspruch 8, wobei das zentrale Verarbeitungsmodul (40) einen Prozessor (44) aufweist, der konfiguriert ist, um den Befehl in der digitalen Form (99) zu dem Schnittstellenmodul (20) jeweils über die USB-Host-Schnittstelle (38) und die USB-Client-Schnittstelle (32) zu übermitteln.

10. System (100) nach einem der Ansprüche 1 bis 9, wobei der Befehl, der von dem zentralen Verarbeitungsmodul (40) übermittelt wird, mindestens einen von Öffnungs-/Schließbefehlen für Leistungsschutzschalter, Öffnungs-/Schließbefehlen für Trennschalter, Senkungs-/Erhöhungsbefehlen für Transformatorstufenschalter, eines Befehls zum Einsetzen einer bestimmten Position in einem elektrischen Schalter oder eine Kombination davon umfasst.

11. System (100) nach einem der Ansprüche 2 bis 10, wobei die USB-Host-Schnittstelle (38) in einer Sterntopologie mit mehreren USB-Client-Schnittstellen (32) der entsprechenden Schnittstellenmodule (20) verbunden ist.

12. System (100) nach einem der Ansprüche 2 bis 11, das ferner mindestens einen USB-Hub (60) aufweist, der derart zwischen der USB-Client-Schnittstelle (32) und der USB-Host-Schnittstelle (38) verbunden ist, dass das zentrale Verarbeitungsmodul (40) mit dem Schnittstellenmodul (20) jeweils über die USB-Host-Schnittstelle (38), den USB-Hub (60) und die USB-Client-Schnittstelle (32) kommuniziert.

13. System (100) nach Anspruch 12, wobei die USB-Host-Schnittstelle (38) in einer Sterntopologie mit mindestens einer USB-Client-Schnittstelle (32) und mit mindestens einem USB-Hub (60) verbunden ist.

14. System (100) nach Anspruch 12, wobei die USB-Host-Schnittstelle (38) in einer Baumtopologie mit mindestens einer USB-Client-Schnittstelle (32) und mit mindestens einem USB-Hub (60) verbunden ist.

## Revendications

1. Système (100) de protection, de commande et de contrôle d'un réseau (1) électrique, comprenant au moins une sous-station, le système (100) comprenant :
- au moins un module (10) de réseau configuré pour détecter au moins une mesure électrique du réseau (1) électrique et/ou configuré pour mettre en oeuvre un état électrique dans le réseau (1) électrique,
- un module (40) central de traitement configuré pour communiquer avec le module (10) de réseau, le module (40) central de traitement étant configuré pour recevoir de l'information correspondant à la mesure électrique envoyée par le module (10) de réseau et/ou pour acheminer une instruction au module (10) de réseau correspondant à l'état électrique à mettre en oeuvre dans le réseau (1) électrique, le module (40) central de traitement étant l'un d'une unité terminale à distance, d'un relais de protection et d'un dispositif électronique intelligent et
- un module (20) d'interface monté entre le module (10) de réseau et le module (40) central de traitement, le module (20) d'interface étant configuré pour transformer l'information de la forme (9) analogique à la forme (99) numérique ou pour transformer l'instruction de la forme (99) numérique en la forme (9) analogique à l'extérieur du module (40) central de traitement et
dans lequel la communication entre le module (20) d'interface et le module (40) central de traitement repose sur l'architecture (30) Universal Serial Bus (USB) et
dans lequel le module (10) de réseau, le module (40) central de traitement et le module (20) d'interface sont implantés à un niveau de sous-station.

2. Système (100) suivant la revendication 1, dans lequel l'architecture (30) USB comprend une interface (38) USB d'hôte reliée au module (40) centrale de traitement et une interface (32) USB de client reliée au module (20) d'interface, de manière à ce que le module (40) central de traitement communique avec le module (20) d'interface par l'intermédiaire de l'interface (38) USB d'hôte et de l'interface (32) USB de client, respectivement.

3. Système (100) suivant la revendication 1 ou 2, dans lequel le module (10) de réseau comprend au moins un détecteur (2) configuré pour détecter la au moins un mesure électrique du réseau (1) électrique et pour produire, sous forme (9) analogique, l'information correspondant à la mesure électrique ainsi détectée.

4. Système (100) suivant la revendication 3, dans lequel le au moins un module (20) d'interface comprend un convertisseur (22) analogique à numérique couplé au au moins un détecteur (2) et configuré pour transformer l'information de la forme (9) analogique à la forme (99) numérique.

5. Système (100) suivant la revendication 4, dans lequel le module (40) central de traitement comprend un processeur (42) configuré pour recevoir l'information sous forme (99) numérique du module (20) d'interface par l'intermédiaire de l'interface (32) USB de client et de l'interface (38) USB d'hôte respectivement.

6. Système (100) suivant l'une quelconque des revendications 1 à 5, dans lequel l'information correspondant à la mesure électrique détectée par le module (10) de réseau comprend au moins l'un de tensions et de courants alternatifs fournis par un transformateur, d'un signal analogique de basse énergie fourni par un transformateur d'instrument, de signaux de sortie analogiques d'une sonde de température, d'un signal de sortie analogique d'une sonde de pression, d'un signal de sortie analogique d'un détecteur de mouvement, d'un signal indiquant un état d'un disjoncteur, d'un signal indiquant un état d'un sectionneur, d'un signal indiquant un état d'un interrupteur de mise à la terre, d'un signal indiquant un état d'un interrupteur électrique placé sur le réseau (1) électrique et de leurs combinaisons.

7. Système (100) suivant l'une quelconque des revendications 1 à 6, dans lequel le module (10) de réseau comprend au moins un actionneur (4) configuré pour mettre en oeuvre, dans le réseau (1) électrique, l'état correspondant à l'instruction.

8. Système (100) suivant la revendication 7, dans lequel le au moins un module (20) d'interface comprend un convertisseur (24) numérique à analogique couplé au module (40) central de traitement et configuré pour recevoir l'instruction du module (40) central de traitement et pour transformer l'instruction de la forme (99) numérique en la forme (9) analogique.

9. Système (100) suivant la revendication 8, dans lequel le module (40) central de traitement comprend un processeur (44) configuré pour acheminer l'instruction sous forme (99) numérique au module (20) d'interface par l'intermédiaire de l'interface (38) USB d'hôte et de l'interface (32) USB de client, respectivement.

10. Système (100) suivant l'une quelconque des revendications 1 à 9, dans lequel l'instruction acheminée par le module (40) central de traitement comprend au moins l'une d'instructions d'ouverture/fermeture de disjoncteurs, d'instructions d'ouverture/fermeture de sectionneurs, d'instructions d'abaissement/levée de commutateurs de prise de transformateur, d'une instruction pour établir une position précise dans un commutateur électrique ou de leurs combinaisons.

11. Système (100) suivant l'une quelconque des revendications 2 à 10, dans lequel l'interface (38) USB d'hôte est reliée suivant une topologie en étoile à une pluralité d'interfaces (32) USB de client des modules (20) d'interface correspondants.

12. Système (100) suivant l'une quelconque des revendications 2 à 11, comprenant au moins un concentrateur (60) USB monté entre l'interface (32) USB de client et l'interface (38) d'hôte, de manière à ce que le module (40) central de traitement communique avec le module (20) d'interface par l'intermédiaire de l'interface (38) USB d'hôte du concentrateur (60) USB et de l'interface (32) USB de client, respectivement.

13. Système (100) suivant la revendication 12, dans lequel l'interface (38) USB d'hôte est reliée suivant une topologie en étoile à au moins une interface (32) USB de client et à au moins un concentrateur (60) USB.

14. Système (100) suivant la revendication 12, dans lequel l'interface (38) USB d'hôte est reliée suivant une topologie en étoile à au moins une interface (32) USB de client et à au moins un concentrateur (60) USB.
